# EUROPÄISCHE PATENTSCHRIFT

(11) **EP 0 848 444 B1**
(45) Veröffentlichungstag und Bekanntmachung des Hinweises auf die Patenterteilung: **11.02.2004**
(21) Anmeldenummer: 97119166.3
(22) Anmeldetag: 03.11.1997
(51) Int. Cl.: H01M 6/18, H01M 10/40

(54) **Verfahren zur Herstellung von Polymerelektrolyten**
Process for manufacturing polymer electrolytes
Procédé de fabrication d'électrolytes polymères

(30) Priorität: 14.12.1996 DE 19652174
(43) Veröffentlichungstag der Anmeldung: 17.06.1998
(73) Patentinhaber: VARTA Microbattery GmbH, 30419 Hannover (DE)
(72) Erfinder: Bäuerlein, Peter, Dr., 65520 Bad Camberg (DE)
(74) Vertreter: Patentanwälte Ruff, Wilhelm, Beier, Dauster & Partner

(56) Entgegenhaltungen:
- US-A- 4 617 325
- US-A- 5 296 318
- US-A- 5 418 091
- PATENT ABSTRACTS OF JAPAN vol. 1997, no. 03, 31. März 1997 (1997-03-31) & JP 08 287950 A (SUMITOMO CHEM CO LTD), 1. November 1996 (1996-11-01)
- PATENT ABSTRACTS OF JAPAN vol. 011, no. 384 (E-565), 15. Dezember 1987 (1987-12-15) & JP 62 150668 A (NEOS CO LTD), 4. Juli 1987 (1987-07-04)

## Beschreibung

Die Erfindung betrifft ein Verfahren zur Herstellung von Polymerelektrolyten für wiederaufladbare Lithium-Interkalationszellen, welche eine Lösung eines dissoziierbaren Lithium-Salzes dispergiert in einer polymeren Matrix enthalten, wobei die polymere Matrix ein selbsttragender Film aus einem Copolymer von Vinylidendifluorid und Hexafluoropropylen (PVDF-HFP-Copolymer) ist, bei dem ein Austausch des Weichmachers gegen eine Lösung des dissoziierbaren Lithium-Salzes in einem organischen Lösungsmittel vorgenommen wird, so dass der Gehalt der Lösung des dissoziierbaren Lithium-Salzes in der polymeren Matrix 20 - 70 Gew. % beträgt.

Polymerelektrolyte, Verfahren zu ihrer Herstellung und ihre Verwendung sind aus den Dokumenten US-A 5296318, US-A 5418091 und US-A 5429891 bekannt. Die polymeren Elektrolyte, die nach den bekannten Verfahren erhalten werden, können als Separator in sekundären Lithium-Zellen eingesetzt werden, wobei das Material gleichzeitig die Funktion des Elektrolyten übernimmt. Die festen Polymerelektrolyte (Solid Polymer Electrolytes - SPE) stellen somit eine Kombination aus Separator und immobilisierten Elektrolyt dar. Diese sind insbesondere in Lithium-Interkalationszellen, die auch als Lithium-Swingoder Rocking-Chair-Zellen bekannt sind, einsetzbar. Die festen Polymerelektrolyte sind gegenüber anderen Separatoren durch ihren Gehalt an Elektrolyt und ihre geringe Fließneigung besonders zum Bau von galvanischen Zellen geeignet, deren Elektroden- und Separatorendicke im Bereich von 80 bis 250 µm liegt.

Nach den bekannten Verfahren werden die bei der Herstellung von Polymerelektrolyten eingesetzten Weichmacher gegen eine Lösung des dissoziierbaren Lithium-Salzes wie LiPF₆, LiClO₄, oder LiBF₄ (auch Leitsalze genannt) in organischen Lösungsmittelgemischen wie Ethylencarbonat (EC) / Dimethylencarbonat (DMC), Propylencarbonat (PC) / Diethylcarbonat (DEC), Dimethoxyethan (DME) oder Dipropylcarbonat (DPC) ausgetauscht. Vorzugsweise werden dabei die Weichmacher durch Lösungsmittel, in denen das Ausgangspolymer nicht löslich ist, wie Diethlyether, Hexan, Freon 113 oder Methanol extrahiert. Anschließend wird der Polymerfilm getrocknet. Die Tränkung des Polymerfilms mit der Lösung des dissoziierbaren Lithium-Salzes kann sowohl separat als auch nach dem Laminieren der Elektroden mit dem Polymerelektrolyten erfolgen.

Weiterhin ist es bekannt, als Weichmacher ein als Flüssigelektrolyt bekanntes Gemisch der obengenannten Lösungsmittel und darin gelöster Leitsalze einzusetzen, wobei dieses Gemisch in die sich bildende Polymermatrix eingeschlossen wird.

Die US 4,617,325 beschreibt ein organisches Polymer, das ein ionisierbares Metallsalz und ein Additiv enthält. Das Additiv beinhaltet ein Phosphat und hat den Zweck, dem Polymer eine höhere Leitfähigkeit zu vermitteln als diejenige, die erreicht würde, wenn nur das Metallsalz allein im Polymer dispergiert wäre.

Aus dem japanischen Abstract JP 08287950 ist die Verwendung von substituierten Carbonsäureestern in nicht wässrigen 0,1 bis 2 molaren Elektrolytlösungen von sekundären Lithium-Batterien bekannt, um die Entladecharakteristik der Batterie bei niederen Temperaturen zu verbessern.

Aus dem japanischen Abstract JP 62150668 ist der Einsatz von 1,3-Dioxalan-2-on-Derivaten bekannt, um in Zellen eine Eigenschaftsverschlechterung aufgrund einer chemischen Veränderung während des Ent- bzw. Aufladevorgangs, zu verhindern. Die Erfindung hat sich die Aufgabe gestellt, die bekannten Verfahren zur Herstellung von Polymerelektrolyten zu vereinfachen.

Es wurde gefunden, daß die mit Elektrolytlösungsmitteln wie Propylencarbonat, Ethylencarbonat oder Dimethylcarbonat als Weichmacher hergestellten polymeren Elektrolyten nicht die angestrebte Diaphragmenleitfähigkeit aufweisen und daß die mit anderen Weichmachern hergestellten Polymerelektrolyten einer vollständigen Extraktion dieser Weichmacher unterzogen werden müssen, da die Weichmacher unter den elektrochemischen Bedingungen in einer Lithium-Interkalationszelle elektrochemisch nicht stabil sind und zu einem raschen Kapazitätsverlust der Zellen führen. Die Erfindung schlägt vor, bei der Herstellung der Polymerelektrolyten Weichmacher einzusetzen, die unter den elektrochemischen Bedingungen einer Lithium-Interkalationszelle stabil sind und die aus der Gruppe bestehend aus Hexylencarbonat (HC), Octylencarbonat (OC) oder Tributylphosphat (TBP) ausgewählt werden.

Besonders vorteilhaft wird das Verfahren in der Weise durchgeführt, daß der Austausch des Weichmachers gegen die Lösung des dissoziierbaren Salzes direkt erfolgt. Der Weichmacher wird, dabei nicht erst mit einem Lösungsmittel, in dem nur der Weichmacher und nicht das Polymer löslich ist, extrahiert und der Polymerfilm dann getrocknet, sondern das den Weichmacher enthaltende Polymere wird in eine Elektrolytlösung getaucht und damit der direkte Austausch des Weichmachers gegen den Elektrolyten vorgenommen.

Vorteilhafterweise können dabei 1 bis 20 Gew.% des Weichmachers im Polymerelektrolyten verbleiben.

Die Erfindung wird nachfolgend an 3 Abbildungen näher erläutert.

Es zeigen:
- Abbildung 1: die Abhängigkeit der Leitfähigkeit und der Elektrolytaufnahme vom eingesetzten Weichmacher;
- Abbildung 2: den Einfluß des Weichmachers auf die negative Elekrode;
- Abbildung 3: die Belastbarkeit einer erfindungsgemäßen Vollzelle.

Die Versuchszellen wurden hergestellt, in denen
die Anode aus
56 Gew.% Kohlenstoffmaterial,
16 Gew.% PVDF-HFP-Copolymer,
3 Gew.% Leitruß und
25 Gew.% Weichmacher;
die Kathode aus
56 Gew.% Metalloxid,
15 Gew.% PVDF-HFP-Copolymer,
6 Gew.% Leitruß und
23 Gew.% Weichmacher
und der Separator aus
20 Gew.% Füllstoff (SiO₂),
30 Gew.% PVDF-HFP-Copolymer und
50 Gew.% Weichmacher
besteht. Als Kohlenstoffmaterial wurde Koks oder Graphit eingesetzt. Die Metalloxide wurden aus der Gruppe bestehend aus LiCoO₂, LiNiO₂, oder LiMn₂O₄ ausgewählt.

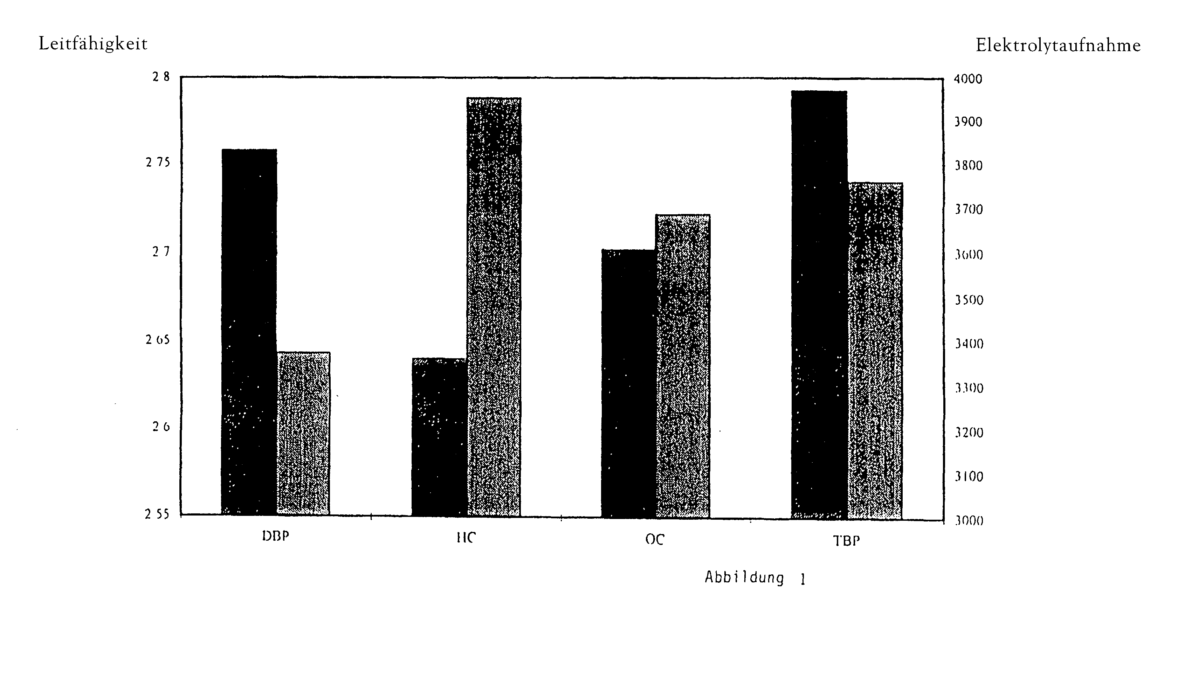

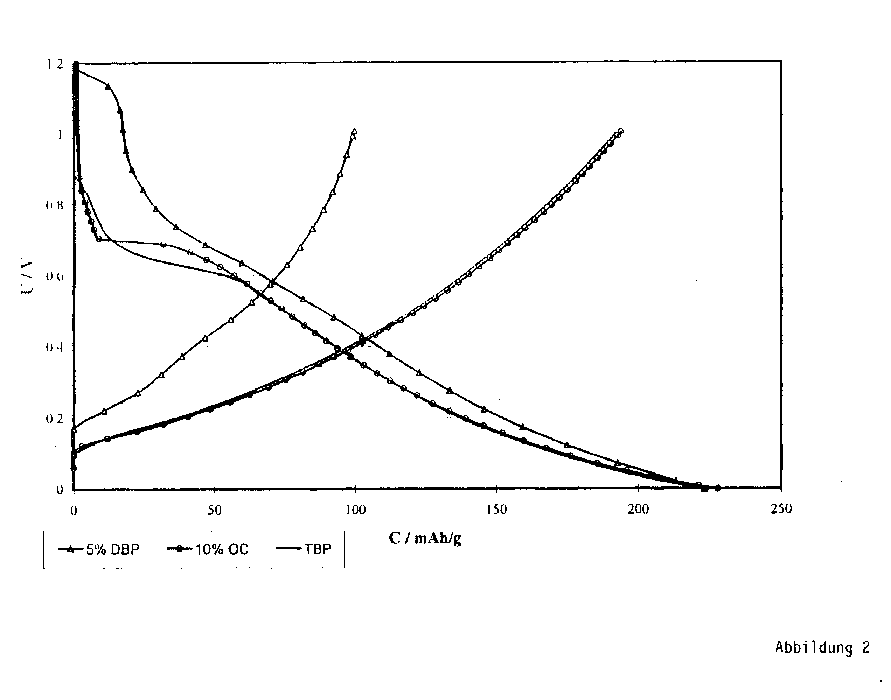

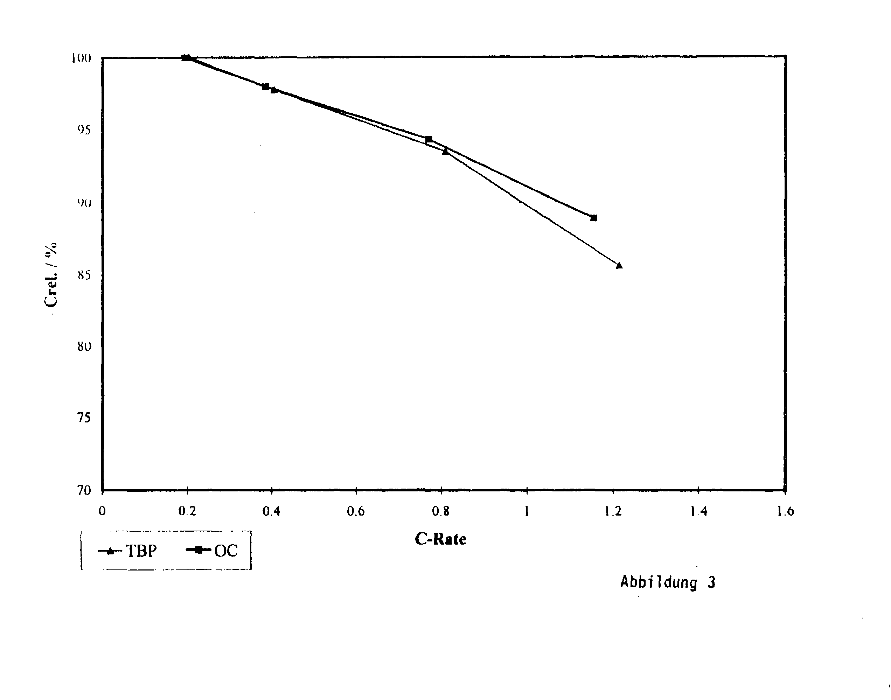

Die Bestimmung des Lithiumgehaltes im Polymerelektrolyten erfolgte durch Atomemissionsspektroskopie (AES), die Diaphragmenleitfähigkeit wurde in der Weise bestimmt, daß von Flüssigelektrolyt umgebene Proben des festen Polymerelektrolyten zwischen zwei Edelstahlelektroden mit 10 cm² Fläche eingespannt werden. Der Plattenabstand wird dabei durch die Dicke der zu vermessenden Probe definiert. Bei einem Anpreßdruck von 9,8 N/cm² wird dann ein Impedanzspektrum aufgenommen. Die Messung der galvanostatischen Ladung und Entladung erfolgte in Druckflachzellen bei einem Anpreßdruck von 50,0 N/cm². Als Gegenelektroden wurden 250 µm dicke Lithiummetallfolien verwendet, die durch zwei Lagen Separator gegen die Gegenelektrode isoliert sind. Als Elektrolyte dienten Standardelektrolyte (1molar LiPF₆ in EC/DMC 65:35), die y Gew.% eines erfindungsgemäßen Weichmachers enthielten. Abbildung 1 zeigt einen Vergleich der Elektrolytaufnahme (rechte Säulen der Graphik an Hand des Lithiumgehaltes) und der Leitfähigkeiten (linke Säulen der Graphik) in festen Polymerelektrolyten in Abhängigkeit vom eingesetzten Weichmacher. Als Referenz wurde eine Probe mit dem aus dem Stand der Technik bekannten Dibutylphthalat (DBP) eingesetzt. Abbildung 2 zeigt den Einfluß des Weichmachers auf die Elektrochemie der negativen Elektrode. Dabei wurden die Kurve 1 mit einem Zusatz von 5 Gew.% DBP, Kurve 2 mit einem Zusatz vom 10 Gew.% OC und Kurve 3 mit einem Zusatz vom 10 Gew.% TBP erhalten. In Abbildung 3 ist die Belastbarkeit von Vollzellen (Solid Polymer Electrolyte - SPE-Vollzellen) dargestellt, die Polymerelektrolyte mit den erfindungsgemäßen Weichmachern OC bzw. TBP enthalten. Dabei wird die ermittelte Kapazität bei einer fünfstündigen Entladung als 100 %ige Kapazität definiert und die Abhängigkeit des Kapazitätsabfalles von höheren Entladeströmen ausgewertet.

## Patentansprüche

1. Verfahren zur Herstellung von Polymerelektrolyten für wiederaufladbare Lithium-Interkalationszellen, welche eine Lösung eines dissoziierbaren Lithiumsalzes dispergiert in einer polymeren Matrix enthalten, wobei die polymere Matrix ein selbsttragender Film aus einem Copolymer von Vinylidendifluorid und Hexafluoropropylen ist, bei dem ein Austausch des Weichmachers gegen eine Lösung des dissoziierbaren Lithium-Salzes in einem organischen Lösungsmittel vorgenommen wird, so dass das Polymer anschließend 20 - 70 Gew. % der Lösung des dissoziierten Lithium-Salzes enthält, **dadurch gekennzeichnet, dass** Weichmacher verwendet werden, die unter den elektrochemischen Bedingungen einer wiederaufladbaren Lithium-Interkalationszellen stabil sind und aus der Gruppe bestehend aus Hexylencarbonat, Octylencarbonat oder Tributylphosphat ausgewählt werden.

2. Verfahren nach Anspruch 1, **dadurch gekennzeichnet, dass** der Austausch des Weichmachers gegen die Lösung des dissoziierbaren Lithium-Salzes direkt erfolgt, wobei das den Weichmacher enthaltende Polymer in eine Elektrolytlösung getaucht und damit der direkte Austausch der Weichmacher gegen den Elektrolyten vorgenommen wird.

3. Verfahren nach Anspruch 1 oder 2, **dadurch gekennzeichnet, dass** 1 bis 10 Gew. % des Weichmachers im festen Elektrolyt verbleiben.

## Claims

1. Method for preparing polymer electrolytes for rechargeable lithium intercalation cells which contain a solution of a dissociable lithium salt dispersed in a polymeric matrix, the polymeric matrix being a self-supporting film of a copolymer of vinylidene difluoride and hexafluoropropylene, in which the plasticizer is exchanged for a solution of the dissociable lithium salt in an organic solvent, so that the polymer then contains 20-70 wt% of the solution of the dissociated lithium salt, **characterized in that** plasticizers are used which are stable under the electrochemical conditions of a rechargeable lithium intercalation cell and are selected from the group consisting of hexylene carbonate, octylene carbonate or tributyl phosphate.

2. Method according to Claim 1, **characterized in that** the exchange of the plasticizer for the solution of the dissociable lithium salt is carried out directly, where the polymer containing the plasticizer is immersed in an electrolyte solution, the direct exchange of the plasticizers for the electrolyte thus being effected.

3. Method according to Claim 1 or 2, **characterized in that** from 1 to 10 wt% of the plasticizer remain in the solid electrolyte.

## Revendications

1. Procédé pour la préparation d'électrolytes polymères pour cellules à intercalation au lithium, rechargeables, qui contiennent une solution d'un sel de lithium dissociable, dispersée dans une matrice polymère, la matrice polymère étant un film autoporteur à base d'un copolymère de difluorure de vinylidène et d'hexafluoropropylène, dans lequel est effectué un échange du plastifiant contre une solution du sel de lithium dissociable dans un solvant organique, de sorte que le polymère contient ensuite 20-70 % en poids de la solution du sel de lithium dissocié, **caractérisé en ce qu'**on utilise des plastifiants qui sont stables dans les conditions électrochimiques d'une cellule à intercalation de lithium rechargeable et sont choisis dans le groupe constitué par le carbonate d'hexylène, le carbonate d'octylène et le phosphate de tributyle.

2. Procédé selon la revendication 1, **caractérisé en ce que** l'échange du plastifiant contre la solution du sel de lithium dissociable s'effectue directement, le polymère contenant le plastifiant étant trempé dans la solution d'électrolyte et l'échange direct du plastifiant contre l'électrolyte étant ainsi effectué.

3. Procédé selon la revendication 1 ou 2, **caractérisé en ce que** 1 à 10 % en poids du plastifiant restent dans l'électrolyte solide.
